(19) Europäisches Patentamt
European Patent Office
Office européen des brevets

(11) **EP 2 662 963 B1**

(12) **EUROPEAN PATENT SPECIFICATION**

(45) Date of publication and mention
of the grant of the patent:
**05.07.2017 Bulletin 2017/27**

(51) Int Cl.:
*H02M 1/14* (2006.01)      *H02P 9/10* (2006.01)
*H02P 9/30* (2006.01)      *H02M 7/30* (2006.01)

(21) Application number: **12167404.8**

(22) Date of filing: **09.05.2012**

(54) **High voltage DC power generation**

Hochspannungs-Gleichstromstromerzeugung

Génération d'énergie CC haute tension

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.11.2013 Bulletin 2013/46**

(73) Proprietor: **Hamilton Sundstrand Corporation
Windsor Locks, CT 06096-1010 (US)**

(72) Inventors:
• **Rozman, Gregory I.
Rockford, IL 61114 (US)**
• **Moss, Steven J.
Rockford, IL 61114 (US)**

• **Fang, Si Jian
Carpentersville, IL 60110 (US)**

(74) Representative: **Tomlinson, Kerry John
Dehns
St Bride's House
10 Salisbury Square
London
EC4Y 8JD (GB)**

(56) References cited:
**EP-A2- 2 075 899        EP-A2- 2 299 586
US-A1- 2007 121 354      US-A1- 2011 089 693
US-A1- 2012 007 428**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The subject matter disclosed herein relates generally to the field of electric power generating systems (EPGS), and more particularly to high voltage direct current (DC) power generation with active rectification.

DESCRIPTION OF RELATED ART

Generally, DC power generating systems for ground vehicles employ a Permanent Magnet Generator (PMG) and active rectifier. Generator design must accommodate back EMF requirements in consideration of the controllability range of the active rectifier within the operating rotational speed of PMG. There may be a need to improve performance of voltage regulation in the presence of constant power loads and increase active rectifier operating range due to the large PMG speed range variation.

BRIEF SUMMARY

According to one aspect of the invention, there is provided a DC power system, comprising: a permanent magnet generator; an active rectifier in electrical communication with the permanent magnet generator; and a controller in electrical communication with the active rectifier, wherein the controller is configured to regulate d-q components of a stator current of the permanent magnet generator in a synchronous reference frame, characterised in that the controller includes a synchronous current regulator in electrical communication with the active rectifier, and wherein the synchronous current regulator is configured to provide a pulse width modulation scheme to the active rectifier based on d-q components of reference voltages of the active rectifier; wherein the controller includes an electrical angle estimator, which electrical angle estimator is configured to estimate a speed of the permanent magnet generator and an angle of power generated at the permanent magnet generator; wherein the controller further includes a non-linear voltage regulator in communication with the synchronous current regulator and the electrical angle estimator, and wherein the non-linear voltage regulator is configured to provide the d-q components of the feedback voltage; and the non-linear voltage regulator is in communication with the electrical angle estimator, and wherein the voltage regulator is configured to provide d-q current reference components to the synchronous current regulator, the d-q reference components being based on the estimated speed of the permanent magnet generator and a feedback voltage output at the active rectifier.

Other aspects, features, and techniques of the invention will become more apparent from the following description taken in conjunction with the drawings.

BRIEF DESCRIPTION OF THE SEVERAL VIEWS OF THE DRAWINGS

Referring now to the drawings wherein like elements are numbered alike in the several FIGURES:

FIG. 1 illustrates a DC power generating system, according to an example embodiment;

FIG. 2 illustrates a voltage regulator, according to an example embodiment; and

FIG. 3 illustrates a synchronous current regulator, according to an example embodiment.

DETAILED DESCRIPTION

Embodiments of a DC power generating system are provided herein, with example embodiments being discussed below in detail. According to example embodiments, technical benefits and improvements in voltage regulation through active control reduce requirements with regards to the size of a dc link capacitor within the DC power generating system, resulting in improved weight, size and cost.

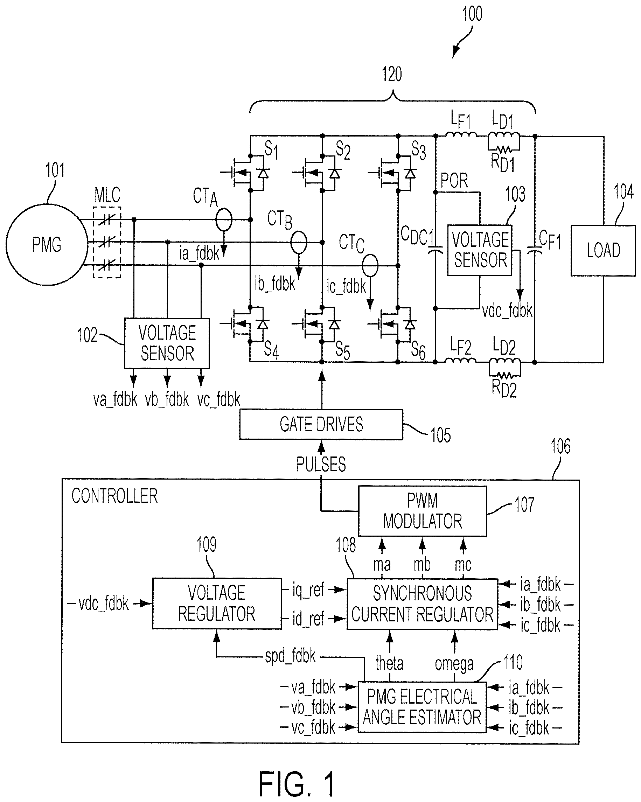

Turning to FIG. 1, a DC power system is shown. The DC power system 100 may be a power system of a vehicle, for example, a car, truck, or other ground vehicle. As illustrated, the system 100 includes a permanent magnet generator (PMG) 101.

The system 100 further includes voltage sensor 102 in communication with each phase output of the PMG 101. The voltage sensor 102 is configured to provide voltage feedback signals for each phase output of the PMG 101.

The system 100 further includes active rectifier 120 in electrical communication with PMG 101 through a safety Main Line Contactor (MLC). The active rectifier 120 includes a plurality of switches $S_1$, $S_2$, $S_3$, $S_4$, $S_5$, and $S_6$ configured to switch on/off in response to pulse width modulated (PWM) signals applied from a gate drive 105. The active rectifier 120 further includes a plurality of current transducers $CT_A$, $CT_B$, and $CT_C$ configured to provide current feedback from each phase output of the PMG 101. The current transducers $CT_A$, $CT_B$, and $CT_C$ are arranged at input portions of respective switches of the plurality of switches $S_1$, $S_2$, $S_3$, $S_4$, $S_5$, and $S_6$.

The active rectifier 120 further includes DC capacitor $C_{DC1}$ coupled across outputs of each switch of the plurality of switches $S_1$, $S_2$, $S_3$, $S_4$, $S_5$, and $S_6$, and voltage sensor 103 coupled in parallel across the DC capacitor $C_{DC1}$. The voltage sensor 103 is configured to provide voltage feedback for the active rectifier 120. The active rectifier 120 further includes inductances $L_{F1}$ and $L_{D1}$ arranged serially along a first rail of a DC output bus of the active rectifier 120, and inductances $L_{F2}$ and $L_{D2}$ arranged serially along a second rail of the DC output bus of the active rectifier 120. Resistances $R_{D1}$ and $R_{D2}$ may further be arranged on the DC output bus, in parallel communication with inductances $L_{D1}$ and $L_{D2}$, respectively. Furthermore, a filter capacitor $C_{F1}$ may be arranged across the DC output bus.

The system 100 further includes load 104 in communication with the active rectifier 120. The load 104 may be any suitable DC load applied to the DC output bus of the active rectifier 120. For example, as described above, the DC load may be a relatively large and constant DC load.

The system 100 further includes the gate drives 105 in communication with the active rectifier 120. The gate drive 105 may be configured to open and close each of the plurality of switches $S_1$, $S_2$, $S_3$, $S_4$, $S_5$, and $S_6$.

The system 100 further includes controller 106 in communication with the gate drives 105. The controller 106 is configured to apply a pulse width modulated (PWM) signal to the gate drives 105. The controller 106 includes a PWM modulator 107 configured to provide the PWM signal.

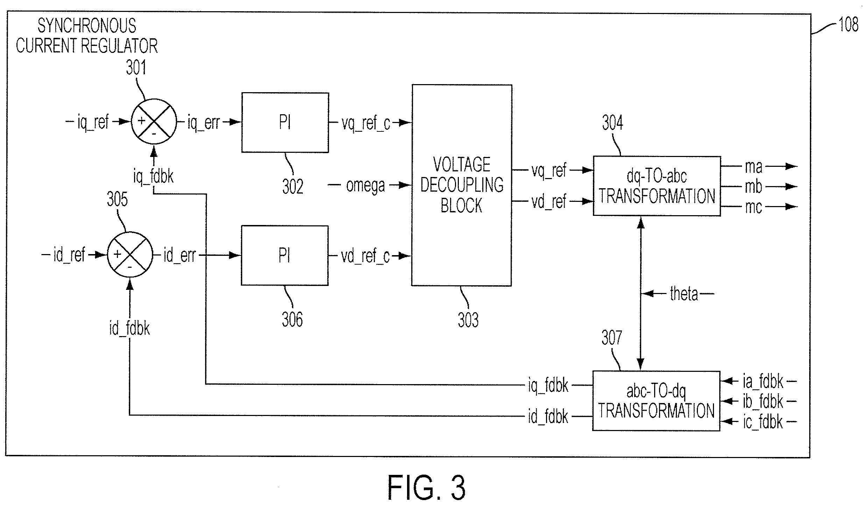

The controller 106 further includes synchronous current regulator 108 in communication with the PWM modulator 107 and the active rectifier 120. For example, the synchronous current regulator 108 may be in communication with the plurality of current transducers $CT_A$, $CT_B$, and $CT_C$ of the active rectifier 120. The synchronous current regulator 108 is described more fully below, with reference to FIG. 3.

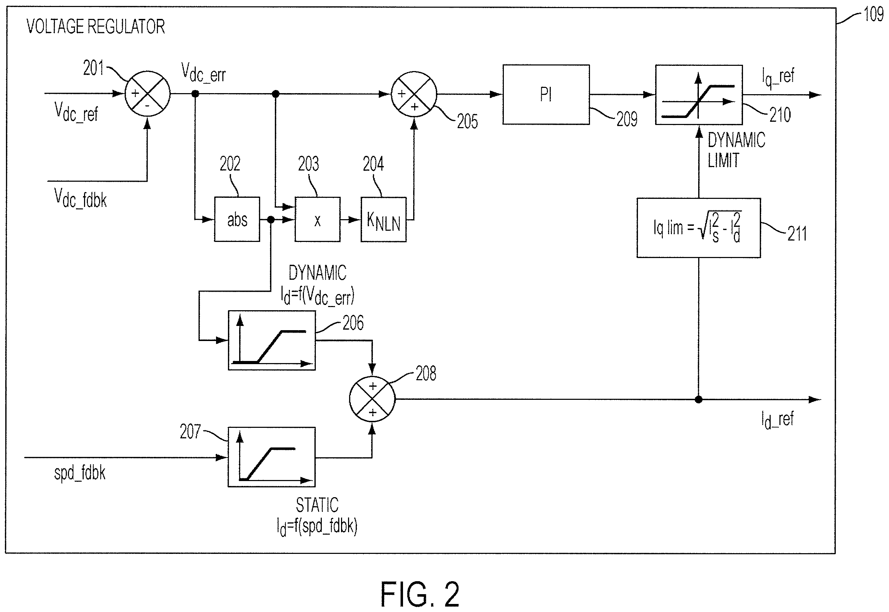

The controller 106 further includes voltage regulator 109 in communication with the synchronous current regulator 108 and the active rectifier 120. For example, the voltage regulator 109 may be in communication with the voltage sensor 103 of the active rectifier 120. The voltage regulator 109 is described more fully below, with reference to FIG. 2.

The controller 106 further includes PMG electrical angle estimator 110 in communication with the voltage regulator 109, the synchronous current regulator 108, and the voltage sensor 102. The PMG electrical angle estimator 110 may be configured to estimate an electrical angle of power generated at PMG 101, and provide the estimation to synchronous current regulator 108. Furthermore, the PMG electrical angle estimator 110 may be configured to estimate a rotational speed of the PMG 101 and provide the speed estimation to the voltage regulator 109. An example PMG electrical angle estimator is described in detail in U.S. Patent Number 7,072,790.

FIG. 2 illustrates voltage regulator 109, according to an example embodiment. The voltage regulator 109 includes nonlinear gain/amplification to improve dynamic performance of the DC output bus of the active rectifier 120 during load transients. As illustrated, the voltage regulator 109 receives a reference voltage and feedback voltage from an active rectifier (e.g., active rectifier 120). The difference (e.g., voltage error) between the reference and feedback voltages is determined at summer 201. The nonlinear gain (204) of the absolute value (202) of the voltage error is summed with the voltage error at block 205 to provide a square function of voltage error to proportional integral (PI) block 209. A q-component of the reference current $I_{q\_ref}$ (to be provided to synchronous current regulator 108) is determined through the dynamic limit of the PI as a function of the d-component of the current reference and the magnitude of a stator current of the PMG 101. This dynamic limit (210-211) facilitates maintaining the stator current within predetermined levels.

A d-component of the reference voltage, current $I_{d\_ref}$ (e.g., reference current to be provided to synchronous current regulator 108), is determined through summer 208 of appropriate Id portions of the stator current. The Id component of the stator current increases dynamically (206) as a function of the voltage error determined through blocks 201-202, and increases statically (207) as a function of PMG rotational speed.

As illustrated in FIG. 1, the currents $I_{q\_ref}$ and $I_{d\_ref}$ are provided to synchronous current regulator 108. FIG. 3 illustrates synchronous current regulator 108, according to an example embodiment.

The synchronous current regulator 108 controls d-q components of the stator current of the PMG 101 in a synchronous reference frame. The synchronous current regulator 108 determines appropriate modulation signals ma, mb, and mc for rectification of each phase output of the PMG. The modulation signals are derived on the output of dq-to-abc transformation block 304 in response to the d-q components (vq_ref and vd_ref) of the stator phase voltage reference. D-q components of the stator phase voltage vector (vq_ref and vd_ref_c) are derived on the outputs of proportional integral blocks 302, 306, respectively in response to the current errors (iq_err and id_err). For example, the current error of $I_{q\_ref}$ is determined through summing of $I_{q\_ref}$ and the q-component (iq_fdbk) of the feedback currents received from current transducers $CT_A$, $CT_B$, and $CT_C$ of the active rectifier 120, at block 301. Further, the current error of current $I_{d\_ref}$ is determined through summing of $I_{d\_ref}$ and the d-component (id_fdbk) of the feedback currents received from current transducers $CT_A$, $CT_B$, and $CT_C$ of the active rectifier 120, at block 305. Both iq_fdbk and id_fdbk are transformed through abc-to-dq transformation block 307, using the angle theta estimated through the angle estimator 110, and the feedback currents received from current transducers $CT_A$, $CT_B$, and $CT_C$ of the active rectifier 120. The d-q components (vq_ref and vd_ref) of the voltage vector are decoupled at voltage decoupling block 303. The voltage decoupling block 303 improves stability of the current loops and may be optional.

If the voltage decoupling block 303 is implemented, the decoupled reference values are transformed at block 304 to produce the appropriate modulation signals ma, mb, and mc using the angle theta estimated through the angle estimator 110, for rectification of each phase output of the PMG. The decoupling may be implemented through Equations 1 and 2, below:

$$\text{Equation 1: } v_{d\_ref} = v_{d\_ref\_c} + omega * L_d * i_{q\_fdbk}$$

$$\text{Equation 2: } v_{q\_ref} = v_{q\_ref\_c} - omega * L_q * i_{d\_fdbk}$$

According to Equations 1 and 2, above, Ld and Lq are d- and q- axis stator self-inductances of the PMG 101.

Alternatively, if the voltage decoupling block 303 is not implemented, outputs of blocks 302 and 306 may be directly transformed at block 304 to produce the appropriate modulation signals ma, mb, and mc using the angle theta estimated through the angle estimator 110, for rectification of each phase output of the PMG.

According to the embodiments above, electrical angle estimation, speed estimation, and d-q components of the reference voltages and currents of the active rectifier 120 may be utilized to establish a PWM scheme through the controller 106 which increases response of a DC output bus of the active rectifier 120. In this manner, DC output voltage is maintained at a relatively constant level negating the necessity of a large DC bus capacitor. Therefore, technical effects and benefits of example embodiments include an increase in DC bus voltage regulation across a wide speed range, improved dynamic performance during large load application and removal, improved DC bus stability during large, constant load application, and reduction in the size, cost, and weight of DC power generating systems.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A DC power system, comprising:

   a permanent magnet generator (101);
   an active rectifier (120) in electrical communication with the permanent magnet generator; and
   a controller (106) in electrical communication with the active rectifier, wherein the controller is configured to regulate d-q components of a stator current of the permanent magnet generator in a synchronous reference frame, wherein the controller includes a synchronous current regulator (108) in electrical communication with the active rectifier, and wherein the synchronous current regulator is configured to provide a pulse width modulation scheme to the active rectifier based on d-q components of reference voltages of the active rectifier; **characterised in that** the controller includes an electrical angle estimator (110), which electrical angle estimator is configured to estimate a speed of the permanent magnet generator and an angle of power generated at the permanent magnet generator, the controller further includes a non-linear voltage regulator in communication with the synchronous current regulator and the electrical angle estimator, and wherein the non-linear voltage regulator is configured to provide the d-q components of the feedback voltage; and
   the non-linear voltage regulator (109) is in communication with the electrical angle estimator, and wherein the voltage regulator is configured to provide d-q current reference components to the synchronous current regulator, the d-q reference components being based on the estimated speed of the permanent magnet generator and a feedback voltage output at the active rectifier.

2. The system of claim 1, wherein the synchronous current regulator is configured to regulate the d-q components of the stator current.

3. The system of claim 1 or 2, wherein the controller further includes a pulse width modulation modulator (107) in communication with the synchronous current regulator and the active rectifier, the pulse width modulation modulator being configured to control the active rectifier based on the regulated d-q components of the stator current.

4. The system of claim 1, wherein the controller includes a synchronous current regulator in electrical communication with the active rectifier, and wherein the synchronous current regulator is configured to provide a pulse width modulation scheme to the active rectifier through regulation of the d-q components of the stator current.

5. The system of claim 4, wherein the synchronous current regulator is configured provide the pulse width modulation scheme to the active rectifier based on proportional integrals of current errors of the active rectifier.

6. The system of claim 1, wherein the controller includes:

an electrical angle estimator (110) in communication with the synchronous current regulator and the non-linear voltage regulator.

7. The system of claim 6, wherein the electrical angle estimator is configured to estimate an angle of power generated at the permanent magnet generator and a speed of the permanent magnet generator, wherein the non-linear voltage regulator is configured to determine d-q components of a reference voltage of the active rectifier based upon the reference voltage and the estimated speed, and wherein the synchronous current regulator is configured to regulate the d-q components of the stator current based on the d-q components of the reference voltage and the estimated angle.

8. The system of any preceding claim wherein the controller is configured to regulate d-q components of the stator current of the permanent magnet generator in a synchronous reference frame based upon voltage feedback of the active rectifier, current feedback of the active rectifier, an estimated speed of the permanent magnet generator, and an estimated angle of power generated at the permanent magnet generator.

9. The system of claims 2 and 8, wherein the synchronous current regulator is configured to regulate the d-q components of the stator current based upon d-q components derived from the voltage feedback, d-q components of the current feedback, and the estimated angle.

10. The system of claim 8, wherein the controller includes a synchronous current regulator in electrical communication with the active rectifier, and wherein the synchronous current regulator is configured to provide a pulse width modulation scheme to the active rectifier.

**Patentansprüche**

1. Gleichstromsystem, umfassend:

einen Permanentmagnetgenerator (101);
einen aktiven Gleichrichter (120) in elektrischer Verbindung mit dem Permanentmagnetgenerator; und
eine Steuerung (106) in elektrischer Verbindung mit dem aktiven Gleichschalter, wobei die Steuerung dazu konfiguriert ist, die d-q-Komponenten eines Statorstroms des Permanentmagnetgenerators in einem synchronen Referenzrahmen zu regulieren,
wobei die Steuerung einen synchronen Stromregulator (108) in elektrischer Verbindung mit dem aktiven Gleichrichter aufweist, und wobei der synchrone Stromregulator dazu konfiguriert ist, dem aktiven Gleichrichter auf Grundlage von d-q-Komponenten von Referenzspannungen des aktiven Gleichrichters ein Pulsweitenmodulationsschema bereitzustellen;
**dadurch gekennzeichnet, dass** die Steuerung eine Schätzeinrichtung für den elektrischen Winkel (110) umfasst, wobei die Schätzeinrichtung für den elektrischen Winkel dazu konfiguriert ist, eine Drehzahl des Permanentmagnetgenerators und einen Winkel des an dem Permanentmagnetgenerator erzeugten Winkels des Stroms zu schätzen,
wobei die Steuerung ferner einen nichtlinearen Spannungsregulator in Verbindung mit dem synchronen Stromregulator und der Schätzeinrichtung für den elektrischen Winkel umfasst und wobei der nichtlineare Spannungsregulator dazu konfiguriert ist, die d-q-Komponenten der Rückkopplungsspannung bereitzustellen; und

dass sich der nichtlineare Spannungsregulator (109) in Verbindung mit der Schätzeinrichtung für den elektrischen Winkel befindet, wobei der Spannungsregulator dazu konfiguriert ist, dem synchronen Stromregulator d-q-Stromreferenzkomponenten bereitzustellen, wobei die d-q-Referenzkomponenten auf der geschätzten Drehzahl des Permanentmagnetgenerators und einem Rückkopplungsspannungsausgang an dem aktiven Gleichrichter basieren.

2. System nach Anspruch 1, wobei der synchrone Stromregulator dazu konfiguriert ist, die d-q-Komponenten des Statorstroms zu regulieren.

3. System nach Anspruch 1 oder 2, wobei die Steuerung ferner einen Pulsweitenmodulationsmodulator (107) in Verbindung mit dem synchronen Stromregulator und dem aktiven Gleichrichter umfasst, wobei der Pulsbreitenmodulationsmodulator dazu konfiguriert ist, den aktiven Gleichrichter auf Grundlage der regulierten d-q-Komponenten des Statorstroms zu steuern.

4. System nach Anspruch 1, wobei die Steuerung einen synchronen Stromregulator in elektrischer Verbindung mit dem aktiven Gleichrichter umfasst und wobei der synchrone Stromregulator dazu konfiguriert ist, dem aktiven Gelichrichter über die Regulierung der d-q-Komponenten des Statorstroms ein Pulsweitenmodulationsschema bereitzustellen.

5. System nach Anspruch 4, wobei der synchrone Stromregulator dazu konfiguriert ist, dem aktiven Gleichrichter auf Grundlage proportionaler Integrale von Stromfehlern des aktiven Gleichrichters das Pulsweitenmuodulationsschema bereitzustellen.

6. System nach Anspruch 1, wobei die Steuerung Folgendes umfasst:

eine Schätzeinrichtung für den elektrischen Winkel (110) in Verbindung mit dem synchronen Stromregulator und dem nichtlinearen Spannungsregulator.

7. System nach Anspruch 6, wobei die Schätzeinrichtung für den elektrischen Winkel dazu konfiguriert ist, einen Winkel des an dem Permanentmagnetgenerator erzeugten Stroms und eine Drehzahl des Permanentmagnetgenerators zu schätzen, wobei der nichtlineare Spannungsregulator dazu konfiguriert ist, die d-q-Komponenten einer Referenzspannung des aktiven Gleichrichters auf Grundlange der Referenzspannung und der geschätzten Drehzahl zu bestimmen, und wobei der synchrone Stromregulator dazu konfiguriert ist, die d-q-Komponenten des Statorstroms auf Grundlage der d-q-Komponenten der Referenzspannung und des geschätzten Winkels zu regulieren

8. System nach einem der vorstehenden Ansprüche, wobei die Steuerung dazu konfiguriert ist, d-q-Komponenten des Statorstroms des Permanentmagnetgenerators in einem synchronen Referenzrahmen auf Grundlage der Spannungsrückkopplung des aktiven Gleichrichters, der Stromrückkopplung des aktiven Gleichrichters, einer geschätzten Drehzahl des Permanentmagnetgenerators und einem geschätzten Winkel des Stroms, der an dem Permanentmagnetgenerator erzeugt wird, zu regulieren.

9. System nach Anspruch 2 und 8, wobei der synchrone Stromregulator dazu konfiguriert ist, die d-q-Komponenten des Statorstroms auf Grundlage der von der Spannungsrückkopplung abgeleiteten d-q-Komponenten, der d-q-Komponenten der Stromrückkopplung und des geschätzten Winkels zu regulieren.

10. System nach Anspruch 8, wobei die Steuerung einen synchronen Stromregulator in elektrischer Verbindung mit dem aktiven Gleichrichter umfasst und wobei der synchrone Stromregulator dazu konfiguriert ist, dem aktiven Gleichrichter ein Pulsweitenmodulationsschema bereitzustellen.

**Revendications**

1. Système de génération d'énergie CC, comprenant :

un générateur à aimants permanents (101) ;
un redresseur actif (120) en communication électrique avec le générateur à aimants permanents ; et

un contrôleur (106) en communication électrique avec le redresseur actif, dans lequel le contrôleur est configuré pour réguler des composantes d-q d'un courant de stator du générateur à aimants permanents dans une trame de référence synchrone,

dans lequel le contrôleur comprend un régulateur de courant synchrone (108) en communication électrique avec le redresseur actif, et dans lequel le régulateur de courant synchrone est configuré pour fournir un schéma de modulation d'impulsions en largeur au redresseur actif sur la base de composantes d-q de tensions de référence du redresseur actif ;

**caractérisé en ce que** le contrôleur comprend un estimateur d'angle électrique (110), lequel estimateur d'angle électrique est configuré pour estimer une vitesse du générateur à aimants permanents et un angle de courant généré au niveau du générateur à aimants permanents,

le contrôleur comprenant en outre un régulateur de tension non-linéaire en communication avec le régulateur de courant synchrone et l'estimateur d'angle électrique, et dans lequel le régulateur de tension non-linéaire est configuré pour fournir les composantes d-q de la tension de contre-réaction ; et

le régulateur de tension non-linéaire (109) étant en communication avec l'estimateur d'angle électrique, et dans lequel le régulateur de tension est configuré pour fournir des composantes de référence de courant d-q au régulateur de courant synchrone, les composantes de référence d-q étant basées sur la vitesse estimée du générateur à aimants permanents et la tension de contre-réaction de sortie au niveau du redresseur actif.

2. Système selon la revendication 1, dans lequel le régulateur de courant synchrone est configuré pour réguler les composantes d-q du courant de stator.

3. Système selon la revendication 1 ou 2, dans lequel le contrôleur comprend en outre un modulateur de modulation d'impulsions en largeur (107) en communication avec le régulateur de courant synchrone et le redresseur actif, le modulateur de modulation d'impulsions en largeur étant configuré pour contrôler le redresseur actif sur la base des composantes d-q régulées du courant de stator.

4. Système selon la revendication 1, dans lequel le contrôleur comprend un régulateur de courant synchrone en communication électrique avec le redresseur actif, et dans lequel le régulateur de courant synchrone est configuré pour fournir un schéma de modulation d'impulsions en largeur au redresseur actif via une régulation des composantes d-q du courant de stator.

5. Système selon la revendication 4
, dans lequel le régulateur de courant synchrone est configuré pour fournir le schéma de modulation d'impulsions en largeur au redresseur actif sur la base d'intégrales proportionnelles de défauts de courant du redresseur actif.

6. Système selon la revendication 1, dans lequel le contrôleur comprend :

un estimateur d'angle électrique (110) en communication avec le régulateur de courant synchrone et le régulateur de tension non-linéaire.

7. Système selon la revendication 6, dans lequel l'estimateur d'angle électrique est configuré pour estimer un angle de courant généré au niveau du générateur à aimants permanents et une vitesse du générateur à aimants permanents, dans lequel le régulateur de tension non-linéaire est configuré pour déterminer des composantes d-q d'une tension de référence du redresseur actif sur la base de la tension de référence et de la vitesse estimée, et dans lequel le régulateur de courant synchrone est configuré pour réguler les composantes d-q du courant de stator sur la base des composantes d-q de la tension de référence et de l'angle estimé.

8. Système selon une quelconque revendication précédente, dans lequel le contrôleur est configuré pour réguler des composantes d-q du courant de stator du générateur à aimants permanents dans une trame de référence synchrone sur la base d'une contre-réaction en tension du redresseur actif, d'une contre-réaction en courant du redresseur actif, d'une vitesse estimée du générateur à aimants permanents, et d'un angle du courant estimé généré au niveau du générateur à aimants permanents.

9. Système selon les revendications 2 et 8, dans lequel le régulateur de courant synchrone est configuré pour réguler les composantes d-q du courant de stator sur la base de composantes d-q dérivées de la contre-réaction en tension, de composantes d-q de la contre-réaction en courant, et de l'angle estimé.

10. Système selon la revendication 8, dans lequel le contrôleur comprend un régulateur de courant synchrone en communication électrique avec le redresseur actif, et dans lequel le régulateur de courant synchrone est configuré pour fournir un schéma de modulation d'impulsions en largeur au redresseur actif.

FIG. 1

FIG. 2

EP 2 662 963 B1

FIG. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7072790 B